# EUROPÄISCHE PATENTSCHRIFT

(11) **EP 3 762 270 B1**
(45) Veröffentlichungstag und Bekanntmachung des Hinweises auf die Patenterteilung: **30.04.2025**
(21) Anmeldenummer: 19708451.0
(22) Anmeldetag: 26.02.2019
(51) Int. Cl.: B60W 50/00, B60W 50/02, G08G 1/0967, G01C 21/30, G01C 21/28, B60W 30/18

(54) **STEUEREINHEIT ZUM BETREIBEN EINER FAHRFUNKTION AN EINER SIGNALISIERUNGSANLAGE**
CONTROL METHOD FOR OPERATING A DRIVING FUNCTION AT A SIGNALLING INSTALLATION
UNITÉ DE COMMANDE D'UNE FONCTION DE ROULEMENT AU NIVEAU D'UN SYSTÈME DE SIGNALISATION

(30) Priorität: 07.03.2018 DE 102018203353
(43) Veröffentlichungstag der Anmeldung: 13.01.2021
(73) Patentinhaber: Bayerische Motoren Werke Aktiengesellschaft, 80809 München (DE)
(72) Erfinder: ADIPRASITO, Bartono, 84184 Ast Tiefenbach (DE); KOHLHUBER, Florian, 80639 München (DE)
(86) Internationale Anmeldenummer: PCT/EP2019/054754
(87) Internationale Veröffentlichungsnummer: WO 2019/170478

(56) Entgegenhaltungen:
- EP-A1- 2 650 857
- EP-A2- 2 944 532
- DE-A1- 10 334 620
- DE-A1- 102014 013 672
- DE-A1- 102014 205 953
- US-A1- 2013 253 754

## Beschreibung

Die Erfindung betrifft eine Steuereinheit zur Bereitstellung einer Fahrfunktion, insbesondere einer Fahrerassistenzfunktion, eines Fahrzeugs in Zusammenhang mit einer Signalisierungsanlage.

Ein Fahrzeug kann ein oder mehrere Fahrfunktionen aufweisen, die den Fahrer des Fahrzeugs bei der Führung, insbesondere bei der Längsführung, des Fahrzeugs unterstützen. Beispielsweise kann durch einen Bremsassistenten eine automatische Bremsung des Fahrzeugs vor einem Hindernis bewirkt werden. Dabei kann das Hindernis ggf. auch eine rote Ampel sein, die über ein oder mehrere Umfeldsensoren des Fahrzeugs erfasst wurde.

Ampelanlagen können an unterschiedlichen Kreuzungen und/oder in unterschiedlichen Ländern sehr unterschiedlich aufgebaut sein. Der unterschiedliche Aufbau von Ampelanlagen kann zu Ungenauigkeiten bei der Erkennung von Signalen führen, die für ein bestimmtes Fahrzeug relevant sind. Als Folge daraus, können die Zuverlässigkeit und/oder der Komfort einer Fahrfunktion beeinträchtigt werden.

Aus der US 2013/0253754 A1 ist bereits ein eine Steuereinheit zum Ermitteln von Ampelinformationen und Berücksichtigen ermittelter Ampelinformationen im Rahmen einer Fahrfunktion bekannt. Weiteren Stand der Technik auf diesem Gebiet offenbarten die DE 103 34 620 A1, die EP 2 944 532 A2, die DE 10 2014 013672 A1 und die EP 2 650 857 A1.

Die vorliegende Erfindung befasst sich mit der technischen Aufgabe, die Zuverlässigkeit und/oder den Komfort einer Fahrfunktion eines Fahrzeugs in Bezug auf eine Signalisierungsanlage zu erhöhen.

Die Aufgabe wird durch die unabhängigen Ansprüche gelöst. Vorteilhafte Ausführungsformen werden u.a. in den abhängigen Ansprüchen beschrieben.

Gemäß einem Aspekt wird eine Steuereinheit für ein Fahrzeug (insbesondere für ein Straßenkraftfahrzeug) beschrieben. Die Steuereinheit ist eingerichtet, eine vorausliegende Signalisierungsanlage zu detektieren, wobei die Signalisierungsanlage zumindest einen Signalgeber (in diesem Dokument auch als Ampel bezeichnet) umfasst. Die Signalisierungsanlage kann z.B. an einer Zufahrt zu einer Kreuzung von mehreren Straßen angeordnet sein. Dabei kann die Signalisierungsanlage eingerichtet sein, zu unterschiedlichen Zeiten unterschiedliche mögliche Fahrtrichtungen über die Kreuzung freizugeben oder zu sperren.

Das Fahrzeug kann ein oder mehreren Umfeldsensoren umfassen, die eingerichtet sind, Sensordaten in Bezug auf das Umfeld des Fahrzeugs zu erfassen. Die Signalisierungsanlage kann auf Basis der Sensordaten detektiert werden. Alternativ oder ergänzend kann die Steuereinheit auf digitale Karteninformation bezüglich eines von dem Fahrzeug befahrenden Straßennetzes zurückgreifen, wobei die digitale Karteninformation die Position von unterschiedlichen Signalisierungsanlagen anzeigt. Die (auf einer Trajektorie bzw. einer Fahrroute des Fahrzeugs) vorausliegende Signalisierungsanlage kann dann (ggf. auch) auf Basis der digitalen Karteninformation ermittelt werden.

Ein Signalgeber kann z.B. ein oder mehrere Lichtzeichen umfassen, die ggf. unterschiedliche Farben aufweisen können. Insbesondere kann ein Signalgeber ein Lichtzeichen einer ersten Farbe (z.B. grün) aufweisen, durch das angezeigt wird, dass ein Fahrzeug in eine Kreuzung einfahren kann. Des Weiteren kann ein Signalgeber ein Lichtzeichen einer zweiten Farbe (z.B. rot) aufweisen, durch das angezeigt wird, dass ein Fahrzeug an der Haltelinie des Signalgebers stehen bleiben soll.

Des Weiteren kann eine Signalisierungsanlage ein oder mehrere Signalgruppen umfassen. Eine Signalgruppe kann dabei als Gruppe von Signalgebern bzw. Ampeln betrachtet werden, die gleichzeitig schalten, und somit gleichzeitig die gleichen aktiven Lichtzeichen aufweisen. Eine Signalgruppe kann ggf. genau einer möglichen Fahrrichtung zugewiesen sein. Alternativ kann eine Signalgruppe mehreren unterschiedlichen möglichen Fahrtrichtungen zugewiesen sein.

Die Signalisierungsanlage kann eine Mehrzahl von Signalgebern umfassen, die zumindest teilweise unterschiedlichen möglichen Fahrtrichtungen zugeordnet sind. Insbesondere kann durch die unterschiedlichen Signalgeber geregelt werden, in welcher möglichen Fahrtrichtung eine Kreuzung zu einem bestimmten Zeitpunkt durchfahren werden kann. Beispielhafte mögliche Fahrtrichtungen sind: Links-Abbiegen, Geradaus-Fahren oder Rechts-Abbiegen. Das Fahrzeug kann sich auf einer Fahrbahn der Signalisierungsanlage (und der dahinterliegenden Kreuzung) nähern. Die Signalisierungsanlage kann dann an unterschiedlichen Positionen (die typischerweise quer zur Fahrbahn verlaufen) unterschiedliche Signalgeber aufweisen, die zumindest teilweise unterschiedlichen möglichen Fahrtrichtungen zugeordnet sein können.

Die Steuereinheit ist eingerichtet, digitale Karteninformation zu ermitteln, die eine Zuordnung des zumindest einen Signalgebers zu zumindest einer möglichen Fahrtrichtung des Fahrzeugs an der Signalisierungsanlage anzeigt und/oder ermöglicht. Insbesondere kann in der digitalen Karteninformation für jede einer Mehrzahl von unterschiedlichen Signalgebern die jeweilige Zuordnung zu einer möglichen Fahrtrichtung angezeigt werden. Die digitale Karteninformation kann diese Information ggf. für unterschiedliche Signalisierungsanlagen in einem Straßennetz anzeigen.

Die digitale Karteninformation kann auf Sensordaten bezüglich der Signalisierungsanlage basieren, die im Vorfeld durch ein oder mehrere Umfeldsensoren zumindest eines Fahrzeugs (ggf. eines anderen und/oder ggf. des gleichen Fahrzeugs) erfasst wurden. Insbesondere kann im Vorfeld auf Basis von Sensordaten die Zuordnung zwischen Signalgeber und möglicher Fahrtrichtung erlernt und als digitale Karteninformation gespeichert worden sein. Dabei können die Sensordaten von ein oder mehreren anderen Fahrzeugen erfasst worden sein (auch von Fahrzeugen, die die in diesem Dokument beschriebene Fahrfunktion nicht aufweisen). Die digitale Karteninformation kann dabei auf einer Speichereinheit des Fahrzeugs gespeichert sein. Alternativ oder ergänzend kann die digitale Karteninformation über eine Kommunikationseinheit des Fahrzeugs von einer Fahrzeug-externen Einheit (z.B. von einem Backend-Server) empfangen werden oder empfangen worden sein.

Die Steuereinheit ist ferner eingerichtet, eine Fahrfunktion des Fahrzeugs in Abhängigkeit von der digitalen Karteninformation zu betreiben. Die Fahrfunktion kann dabei eine zumindest teilweise automatisierte Längs- und/oder Querführung des Fahrzeugs umfassen. Insbesondere kann die Fahrfunktion ein Abbremsen des Fahrzeugs bis zum Erreichen der Signalisierungsanlage umfassen. Mit anderen Worten, die Fahrfunktion kann eine Bremsassistenzfunktion in Bezug auf die Signalisierungsanlage umfassen bzw. sein. Alternativ oder ergänzend kann die Fahrfunktion ein automatisiertes (Wieder-) Anfahren des Fahrzeugs an der Signalisierungsanlage umfassen. Dabei kann die Fahrfunktion in Abhängigkeit von der digitalen Karteninformation (insbesondere in Abhängigkeit von der Zuverlässigkeit der digitalen Karteninformation) im Bereich der Signalisierungsanlage ausgeführt oder ggf. abgebrochen werden.

Durch die Bereitstellung und die Berücksichtigung von digitaler Karteninformation, die die Zuordnung von Signalgebern einer Signalisierungsanlage zu Fahrtrichtungen anzeigt, können der Komfort und die Zuverlässigkeit und die Verfügbarkeit einer Fahrfunktion eines Fahrzeugs im Bereich einer Signalisierungsanlage erhöht werden.

Die Steuereinheit kann eingerichtet sein, auf Basis der digitalen Karteninformation einen relevanten Signalgeber der Signalisierungsanlage zu bestimmen, die für eine geplante Fahrtrichtung des Fahrzeugs relevant ist. Insbesondere kann der relevante Signalgeber in Abhängigkeit von der geplanten Fahrtrichtung des Fahrzeugs aus einer Mehrzahl von Signalgebern der Signalisierungsanlage ausgewählt werden. Die Fahrfunktion kann dann in Abhängigkeit von dem relevanten Signalgeber betrieben werden. Die geplante Fahrtrichtung kann sich z.B. aus einer in einem Navigationssystem des Fahrzeugs geplanten Fahrroute ergeben.

Die Steuereinheit kann eingerichtet sein, einen Status (d.h. einen Signalisierungszustand) des relevanten Signalgebers zu ermitteln. Der Status kann z.B. anzeigen, welches Lichtzeichen des relevanten Signalgebers aktiviert ist (z.B. ob die Ampel rot oder grün ist). Dabei kann der aktuelle Status des relevanten Signalgebers auf Basis der Sensordaten der ein oder mehreren Umfeldsensoren des Fahrzeugs ermittelt werden. Die Fahrfunktion des Fahrzeugs kann dann in Abhängigkeit von dem Status des relevanten Signalgebers betrieben werden.

Beispielsweise kann eine automatische Bremsung des Fahrzeugs durchgeführt werden, wenn der relevante Signalgeber anzeigt, dass das Fahrzeug an der Haltelinie des Signalgebers halten soll. Andererseits kann eine automatische Bremsung unterbleiben, wenn der relevante Signalgeber anzeigt, dass die geplante Fahrtrichtung des Fahrzeugs freigegeben ist. So können der Komfort und die Zuverlässigkeit einer Fahrfunktion im Bereich einer Signalisierungsanlage weiter erhöht werden.

Die Steuereinheit kann eingerichtet sein, zu bestimmen, dass der für die geplante Fahrtrichtung des Fahrzeugs relevante Signalgeber nicht mit ausreichender Zuverlässigkeit ermittelt werden kann. In diesem Fall kann eine manuelle Übergabe zur Führung des Fahrzeugs an den Fahrer des Fahrzeugs veranlasst werden. Beispielsweise kann eine Ausgabe an einen Fahrer des Fahrzeugs erfolgen, dass die Fahrfunktion nicht automatisch durchgeführt werden kann, da der relevante Signalgeber nicht mit ausreichender Zuverlässigkeit ermittelt werden kann. Alternativ kann in diesem Fall eine zumindest vorübergehende Deaktivierung der Fahrfunktion veranlasst werden. Alternativ kann in diesem Fall eine Anfrage bezüglich der automatisierten Ausführung der Fahrfunktion an den Fahrer des Fahrzeugs ausgegeben werden. In Reaktion auf eine entsprechende Rückmeldung des Fahrers kann dann die Fahrfunktion automatisiert ausgeführt werden. Andererseits kann die Steuereinheit eingerichtet sein, zu bestimmen, dass der für die geplante Fahrtrichtung des Fahrzeugs relevante Signalgeber mit ausreichender Zuverlässigkeit ermittelt werden kann. In diesem Fall kann die Fahrfunktion in Abhängigkeit von dem (aktuellen) Status des relevanten Signalgebers betrieben werden.

Es kann somit ein abgestuftes Verhalten der Fahrfunktion bereitgestellt werden. Dabei kann das abgestufte Verhalten der Fahrfunktion in Abhängigkeit von der Zuverlässigkeit erfolgen, mit der der relevante Signalgeber ermittelt werden kann. Wenn z.B. ermittelt wird, dass die Zuverlässigkeit höher als ein erster (relativ hoher) Zuverlässigkeits-Schwellenwert ist, so kann eine automatische Durchführung der Fahrunktion erfolgen. Wenn z.B. ermittelt wird, dass die Zuverlässigkeit zwischen einem zweiten (reduzierten) Zuverlässigkeits-Schwellenwert und dem ersten Zuverlässigkeits-Schwellenwert liegt, so kann eine Ausgabe an den Nutzer des Fahrzeugs erfolgen, mit dem Hinweis, dass die Fahrfunktion nach Freigabe durch den Nutzer automatisiert durchgeführt werden kann. Wenn z.B. ermittelt wird, dass die Zuverlässigkeit unter dem zweiten (reduzierten) Zuverlässigkeits-Schwellenwert liegt, so kann veranlasst werden, dass der Fahrer des Fahrzeugs die Fahraufgabe manuell übernimmt. So kann bereits in einer Übergangsphase (wenn die digitale Karteninformation zumindest teilweise eine reduzierte Güte aufweist), eine komfortable Fahrfunktion mit relativ hoher Verfügbarkeit bereitgestellt werden.

Das Verhalten der Fahrfunktion kann ggf. im Vorfeld und/oder bereits frühzeitig auf Basis der digitalen Karteninformation ermittelt werden. Beispielsweise kann bereits frühzeitig vor Erreichen einer Signalisierungsanlage ermittelt werden, wie sich die Fahrfunktion an der Signalisierungsanlage verhalten wird (z.B. automatisiert, automatisiert nach Freigabe durch den Fahrer oder manuell durch den Fahrer).

Beispielsweise kann die digitale Karteninformation für unterschiedliche Signalisierungsanlagen Daten mit unterschiedliche Güte bzw. Genauigkeit angeben. Für ein oder mehrere Signalisierungsanlagen können ggf. keine Daten in Bezug auf die Signalgeber der Signalisierungsanlagen angegeben werden. Für ein oder mehrere andere Signalisierungsanlagen kann ggf. angezeigt werden, dass es sich bei den Signalisierungsanlagen um komplexe Signalisierungsanlagen mit mehreren unterschiedlichen Signalgebern handelt, aber noch keine eindeutige Zuordnung zwischen Signalgebern und möglichen Fahrtrichtungen bekannt ist. Für ein oder mehrere andere Signalisierungsanlagen kann ggf. angezeigt werden, dass die Signalisierungsanlagen jeweils mehrere Signalgeber aufweisen, diese Signalgeber jedoch jeweils eine Signalgruppe bilden, die für ein oder mehrere mögliche Fahrtrichtungen (ggf. für alle möglichen Fahrtrichtungen) gilt. Für ein oder mehrere andere Signalisierungsanlagen kann ggf. eine eindeutige Zuordnung zwischen Signalgebern und möglichen Fahrtrichtungen angezeigt werden. Die Zuverlässigkeit, mit der der für die geplante Fahrtrichtung des Fahrzeugs relevante Signalgeber ermittelt werden kann, hängt typischerweise von der Güte bzw. Genauigkeit der bereitgestellten digitalen Karteninformation ab.

Die Steuereinheit kann die Sensordaten der ein oder mehreren Umfeldsensoren des Fahrzeugs mit der digitalen Karteninformation abgleichen bzw. fusionieren, um den für die geplante Fahrtrichtung des Fahrzeugs relevanten Signalgeber zu ermitteln. Durch den Abgleich zwischen Sensordaten und digitaler Karteninformation kann der relevante Signalgeber ggf. auch bei relativ geringer Güte bzw. Genauigkeit der digitalen Karteninformation mit relativ hoher Zuverlässigkeit ermittelt werden.

Die Steuereinheit kann eingerichtet sein, die dem zumindest einen Signalgeber zugeordnete mögliche Fahrtrichtung nur dann allein auf Basis der Sensordaten der ein oder mehreren Umfeldsensoren des Fahrzeugs zu ermitteln, wenn die Sensordaten in einer Entfernung zu der Signalisierungsanlage erfasst wurden bzw. werden, die kleiner als oder gleich wie ein Entfernungs-Schwellenwert ist (z.B. weil ein Pfeil der die mögliche Fahrtrichtung eines Signalgebers anzeigt, ansonsten nicht mit ausreichender Genauigkeit erfasst werden kann). Andererseits kann die Steuereinheit eingerichtet sein, die dem zumindest einen Signalgeber zugeordnete mögliche Fahrtrichtung bereits dann auf Basis der digitalen Karteninformation zu ermitteln, wenn das Fahrzeug noch um mehr als den Entfernungs-Schwellenwert von der Signalisierungseinheit entfernt ist. Es kann somit bereits frühzeitig auf Basis der digitalen Karteninformation der relevante Signalgeber ermittelt werden. Insbesondere kann anhand der digitalen Karteninformation der relevante Signalgeber frühzeitig und zuverlässig innerhalb der Sensordaten der ein oder mehreren Umfeldsensoren des Fahrzeugs detektiert werden. So könne der Komfort, die Verfügbarkeit und die Zuverlässigkeit einer Fahrfunktion erhöht werden.

Wie bereits oben dargelegt, kann die digitale Karteninformation in Bezug auf die Signalisierungsanlage auf Basis der Sensordaten von ein oder mehreren Fahrzeugen ermittelt werden. Die Steuereinheit eines Fahrzeugs kann eingerichtet sein, auf Basis der Sensordaten bei einer Fahrt vorbei an der Signalisierungsanlage eine Ausprägung von ein oder mehreren Merkmalen der Signalisierungsanlage zu ermitteln. Die ein oder mehreren Merkmale können umfassen: eine Anzahl von unterschiedlichen Signalgebern der Signalisierungsanlage; und/oder eine Position der ein oder mehreren unterschiedlichen Signalgeber der Signalisierungsanlage; und/oder eine Zuordnung eines Signalgebers der Signalisierungsanlage zu einer möglichen Fahrtrichtung an der Signalisierungsanlage. Des Weiteren kann die Steuereinheit eines Fahrzeugs eingerichtet sein, die ermittelte Ausprägung der ein oder mehreren Merkmalen der Signalisierungsanlage als digitale Karteninformation zu speichern und/oder zur Ermittlung von digitaler Karteninformation bereitzustellen bzw. zu verwenden. So kann zuverlässige digitale Karteninformation in Bezug auf eine Signalisierungsanlage bereitgestellt werden, wodurch die Zuverlässigkeit und der Komfort einer Fahrfunktion erhöht werden können.

Die digitale Karteninformation kann anzeigen, dass die Signalisierungsanlage nur eine (einzige) Signalgruppe aufweist, die für alle möglichen Fahrtrichtungen an der Signalisierungsanlage gilt. Diese Information kann in besonders effizienter Weise (z.B. mittels eines gesetzten Bits in der digitalen Karteninformation) angezeigt werden. Des Weiteren kann diese Information in zuverlässiger Weise auf Basis einer relativ geringen Anzahl von Überfahrten der Signalisierungsanlage ermittelt werden. Wenn die digitale Karteninformation anzeigt, dass die Signalisierungsanlage nur eine einzige Signalgruppe aufweist, so ermöglicht dies eine eindeutige Zuordnung eines detektierten Signalgebers zu einer (insbesondere zu allen) möglichen Fahrtrichtungen an der Signalisierungsanlage. Der Status bzw. der Signalisierungszustand des für die geplante Fahrtrichtung des Fahrzeugs relevanten Signalgebers kann somit mit hoher Zuverlässigkeit (insbesondere mit bis zu 100% Zuverlässigkeit) ermittelt werden.

Alternativ oder ergänzend kann die digitale Karteninformation die Anzahl von unterschiedlichen Signalgruppen der Signalisierungsanlage anzeigen. Beispielsweise kann die digitale Karteninformation anzeigen, dass die Signalisierungsanlage genau zwei unterschiedliche Signalgruppen aufweist. Diese Information kann die Steuereinheit des Fahrzeugs dabei unterstützen, den Status der sensorisch erfassten Signalgeber der Signalisierungsanlage den unterschiedlichen möglichen Fahrtrichtungen zuzuordnen. Es kann somit die Zuverlässigkeit erhöht werden, mit der der Status des für die Fahrtrichtung des Fahrzeugs relevanten Signalgebers ermittelt werden kann (ggf. bis zu 100%).

Alternativ oder ergänzend kann die digitale Karteninformation die (genaue) Zuordnung von unterschiedlichen Signalgebern und/oder unterschiedlichen Signalgruppen der Signalisierungsanlage zu unterschiedlichen (ggf. zu allen) möglichen Fahrtrichtungen an der Signalisierungsanlage anzeigen. Alternativ oder ergänzend kann die digitale Karteninformation Information in Bezug auf die relative Positionierung von unterschiedlichen (ggf. von allen) Signalgebern und/oder Signalgruppen der Signalisierungsanlage zueinander anzeigen. Eine derart detaillierte Information in Bezug auf eine Signalisierungsanlage ermöglicht es typischerweise, den Status bzw. den Signalisierungszustand des für die geplante Fahrtrichtung relevanten Signalgebers mit hoher Zuverlässigkeit (mit bis zu 100%) zu ermitteln. Als Folge daraus kann eine Fahrfunktion (z.B. ein Brems- oder ein Anfahrmanöver) mit hoher Wahrscheinlichkeit automatisiert ausgeführt werden.

Die Steuereinheit kann eingerichtet sein, eine Fahrroute des Fahrzeugs zu ermitteln. Beispielsweise kann zu Beginn einer Fahrt ein Fahrziel an einem Navigationssystem des Fahrzeugs eingegeben werden. Es kann dann bereits im Vorfeld eine Fahrroute für das Fahrzeug ermittelt werden. Des Weiteren kann die Steuereinheit eingerichtet sein, im Vorfeld zu der Fahrt entlang der Fahrroute, eine Vielzahl von Signalisierungsanlagen auf der Fahrroute zu detektieren. Die Signalisierungsanlagen können dabei auf Basis von digitaler Karteninformation ermittelt bzw. detektiert werden, die die Position von Signalisierungsanlagen in einem Straßennetz anzeigt.

Außerdem kann die Steuereinheit eingerichtet sein, im Vorfeld zu der Fahrt entlang der Fahrroute, digitale Karteninformation für die Vielzahl von Signalisierungsanlagen zu ermitteln, wobei die digitale Karteninformation für zumindest ein oder mehrere der Vielzahl von Signalisierungsanlagen eine Zuordnung von Signalgebern zu zumindest einer möglichen Fahrtrichtung des Fahrzeugs an der jeweiligen Signalisierungsanlage anzeigt und/oder ermöglicht.

Es kann dann auf Basis der digitalen Karteninformation für die Vielzahl von Signalisierungsanlagen bereits im Vorfeld zu der Fahrt entlang der Fahrroute bestimmt werden, ob die Fahrfunktion auf der (gesamten) Fahrt entlang der Fahrroute automatisiert betrieben werden kann oder nicht. Insbesondere kann auf Basis der digitalen Karteninformation ein Zuverlässigkeitswert ermittelt werden, der die Zuverlässigkeit anzeigt, mit der an der jeweiligen Signalisierungsanlage eine eindeutige Zuordnung zwischen Signalgebern bzw. Signalgruppen und möglichen Fahrtrichtungen ermittelt werden kann. Wenn ermittelt wird, dass für die Fahrroute keine ausreichend hohe (durchschnittliche) Zuverlässigkeit vorliegt, so kann ein automatisiertes Ausführen der Fahrfunktion für die gesamte Fahrroute unterbunden werden (ggf. nach Rückfrage an einen Nutzer des Fahrzeugs). Andererseits kann ggf. für die gesamte Fahrroute die Fahrfunktion automatisiert ausgeführt werden. So kann der Komfort für einen Nutzer des Fahrzeugs weiter erhöht werden (da das Fahrzeug entlang der gesamten Fahrt ein einheitliches Fahrverhalten zeigt).

Gemäß einem weiteren Aspekt wird eine Steuereinheit für ein Fahrzeug beschrieben. Die in diesem Dokument beschriebenen Aspekte können auch für diese Steuereinheit angewandt werden.

Die Steuereinheit ist eingerichtet, eine vorausliegende Signalisierungsanlage zu detektieren (z.B. auf Basis von Sensordaten und/oder auf Basis von digitaler Karteninformation). Dabei umfasst die Signalisierungsanlage zumindest einen Signalgeber.

Außerdem ist die Steuereinheit eingerichtet, einen Zuverlässigkeitswert zu ermitteln, der die Zuverlässigkeit anzeigt, mit der ein für die (geplante) Fahrtrichtung des Fahrzeugs relevanter Signalisierungszustand bzw. Status der Signalisierungsanlage (insbesondere des Signalgebers der Signalisierungsanlage) ermittelt werden kann. Zu diesem Zweck kann digitale Karteninformation ermittelt werden, die eine Zuordnung des zumindest einen Signalgebers zu zumindest einer möglichen Fahrtrichtung des Fahrzeugs an der Signalisierungsanlage anzeigt und/oder ermöglicht. Alternativ oder ergänzend können Sensordaten bezüglich des zumindest einen Signalgebers ermittelt werden. Der Zuverlässigkeitswert kann dann auf Basis der digitalen Karteninformation und/oder auf Basis der Sensordaten ermittelt werden.

Die Steuereinheit ist eingerichtet, eine Fahrfunktion des Fahrzeugs, insbesondere ein automatisches Bremsmanöver an der Signalisierungsanlage oder ein automatisches Anfahrmanöver an der Signalisierungsanlage, in Abhängigkeit von dem Zuverlässigkeitswert zu betreiben.

Weiter ist die Steuereinheit eingerichtet, auf Basis des Zuverlässigkeitswertes zu bestimmen, ob der für die Fahrtrichtung des Fahrzeugs relevante Signalisierungszustand der Signalisierungsanlage (insbesondere des Signalgebers der Signalisierungsanlage) mit einer ausreichend hohen Zuverlässigkeit für ein automatisches Ausführen der Fahrfunktion ermittelt werden kann oder nicht.

Es wird dann eine Ausgabe an einen Nutzer des Fahrzeugs in Form einer Bestätigungsaufforderung zur Bestätigung des ermittelten Signalisierungszustands generiert, wenn bestimmt wurde, dass der Signalisierungszustand nicht mit einer ausreichend hohen Zuverlässigkeit ermittelt werden kann. Dabei kann die Steuereinheit eingerichtet sein, die Fahrfunktion, insbesondere ein automatisches Bremsmanöver an der Signalisierungsanlage oder ein automatisches Anfahrmanöver an der Signalisierungsanlage, nur dann automatisch auszuführen, wenn bestimmt wurde, dass der Signalisierungszustand mit einer ausreichend hohen Zuverlässigkeit ermittelt werden kann oder wenn der ermittelte Signalisierungszustand durch den Nutzer des Fahrzeugs bestätigt wurde. So können der Komfort für einen Nutzer des Fahrzeugs und die Sicherheit des Fahrzeugs erhöht werden.

Gemäß einem Aspekt wird ein Verfahren zum Betrieb einer Fahrfunktion eines Fahrzeugs beschrieben. Das Verfahren umfasst das Detektieren einer vorausliegenden Signalisierungsanlage, wobei die Signalisierungsanlage zumindest einen Signalgeber umfasst. Außerdem umfasst das Verfahren das Ermitteln von digitaler Karteninformation, die eine Zuordnung des zumindest einen Signalgebers zu zumindest einer möglichen Fahrtrichtung des Fahrzeugs an der Signalisierungsanlage anzeigt. Das Verfahren umfasst ferner das Betreiben der Fahrfunktion des Fahrzeugs in Abhängigkeit von der digitalen Karteninformation.

Gemäß einem weiteren Aspekt wird ein Verfahren zur Ermittlung von digitaler Karteninformation bezüglich einer Signalisierungsanlage beschrieben. Das Verfahren umfasst das Erfassen, anhand von ein oder mehreren Umfeldsensoren eines Fahrzeugs, von Sensordaten bei einer Fahrt vorbei an der Signalisierungsanlage. Außerdem umfasst das Verfahren das Ermitteln einer Ausprägung von ein oder mehreren Merkmalen der Signalisierungsanlage auf Basis der Sensordaten, wobei die ein oder mehreren Merkmale eine Zuordnung eines Signalgebers der Signalisierungsanlage zu einer möglichen Fahrtrichtung an der Signalisierungsanlage umfassen. Das Verfahren umfasst ferner das Ermitteln von digitaler Karteninformation in Bezug auf die Signalisierungsanlage auf Basis der ermittelten Ausprägung der ein oder mehreren Merkmale der Signalisierungsanlage.

Gemäß einem weiteren Aspekt wird ein Straßenkraftfahrzeug (insbesondere ein Personenkraftwagen oder ein Lastkraftwagen oder ein Bus oder ein Motorrad) beschrieben, das die in diesem Dokument beschriebene Steuereinheit umfasst.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch eines der in diesem Dokument beschriebenen Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch eines der in diesem Dokument beschriebenen Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
Figur 1 beispielhafte Komponenten eines Fahrzeugs;
Figur 2 eine beispielhafte Signalisierungsanlage;
Figur 3 eine beispielhafte Verkehrssituation;
Figur 4a ein Ablaufdiagramm eines beispielhaften Verfahrens zur Ermittlung von digitaler Karteninformation für ein Straßennetz; und
Figur 4b ein Ablaufdiagramm eines beispielhaften Verfahrens zum Betreiben eines Fahrfunktion eines Fahrzeugs.

Wie eingangs dargelegt, befasst sich das vorliegende Dokument mit der Erhöhung der Zuverlässigkeit, der Verfügbarkeit und des Komforts einer Fahrfunktion, insbesondere eines Fahrerassistenzsystems, eines Fahrzeugs in Zusammenhang mit einer Signalisierungs- bzw. Ampelanlage.

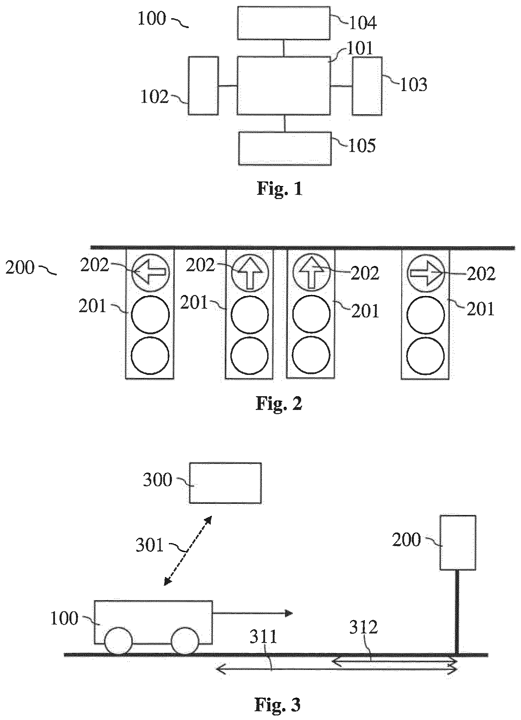

Fig. 1 zeigt beispielhafte Komponenten eines Fahrzeugs 100. Das Fahrzeug 100 umfasst ein oder mehrere Umfeldsensoren 103 (z.B. ein oder mehrere Bildkameras, ein oder mehrere Radarsensoren, ein oder mehrere LIDAR-Sensoren, ein oder mehrere Ultraschallsensoren, etc.), die eingerichtet sind, Umfelddaten in Bezug auf ein Umfeld des Fahrzeugs 100 zu erfassen. Des Weiteren umfasst das Fahrzeug 100 ein oder mehrere Aktoren 102, die eingerichtet sind, auf die Längs- und/oder die Querführung des Fahrzeugs 100 einzuwirken. Beispielhafte Aktoren 102 sind: eine Bremsanlage, ein Antriebsmotor, eine Lenkung, etc.

Die Steuereinheit 101 kann eingerichtet sein, auf Basis der Sensordaten der ein oder mehreren Umfeldsensoren 103 eine Fahrfunktion bzw. eine Fahrerassistenzfunktion bereitzustellen. Beispielweise kann auf Basis der Sensordaten ein Hindernis auf der Fahrtrajektorie des Fahrzeugs 100 erkannt werden. Die Steuereinheit 101 kann daraufhin ein oder mehrere Aktoren 102 (z.B. die Bremsanlage) ansteuern, um eine Kollision des Fahrzeugs 100 mit dem Hindernis zu verhindern.

Insbesondere im Rahmen der automatisierten Längsführung eines Fahrzeugs 100 können neben einem Vorderfahrzeug Geschwindigkeitsschilder und/oder der Straßenverlauf berücksichtigt werden. Des Weiteren kann der Status einer Ampelanlage berücksichtigt werden, so dass das Fahrzeug 100 an einer für die eigene (geplante) Fahrtrichtung relevanten roten Ampel eine Verzögerung bis zu der Haltelinie der Ampel ermöglicht und/oder bei einer grünen Ampel (ggf. wieder) beschleunigt.

Ampelanlagen können in unterschiedlichen Ländern sehr heterogen konstruiert sein und zudem unterschiedlich komplex bezüglich der Fahrtrichtungs-Ampel-Zuordnung sein. So können verschiedene Fahrtrichtungen gebündelt durch eine erste Gruppe von Signalen geregelt sein und eine andere Richtung durch eine andere Gruppe von Signalen. Die sich wiederholenden Signale einer Gruppe können darüber hinaus geografisch an verschiedenen Stellen einer Kreuzung verortet sein. Es kann daher für eine Steuereinheit 101 schwierig sein, auf Basis der Sensordaten zu erkennen, welche ein oder mehreren Signale einer Ampelanlage (d.h. welche Signalgeber und/oder Signal einer Signalisierungsanlage) an einer Kreuzung für die geplante Fahrtrichtung des Fahrzeugs 100 relevant sind und welche nicht (insbesondere wenn das Fahrzeug 100 noch relativ weit von der Ampelanlage entfernt ist).

Fig. 2 zeigt eine beispielhafte Signalisierungs- bzw. Ampelanlage 200. Die in Fig. 2 dargestellte Signalisierungsanlage 200 weist vier unterschiedliche Signalgeber 201 auf, die an unterschiedlichen Position an einer Zufahrt zu einer Kreuzung angeordnet sind. Der linke Signalgeber 201 weist einen Pfeil 202 nach links auf, und zeigt damit an, dass dieser Signalgeber 201 für Linksabbieger gilt. Die beiden mittleren Signalgeber 202 weisen einen Pfeil 202 nach oben (oder keinen Pfeil 202) auf und zeigen damit an, dass diese beiden Signalgeber 201 für eine Geradeausfahrt gelten. Die einzelnen Lichtzeichen dieser beiden Signalgeber 201 bilden Signalgruppen. Des Weiteren weist der rechte Signalgeber 201 einen Pfeil 202 nach rechts auf, und zeigt damit an, dass dieser Signalgeber 201 für Rechtsabbieger gilt.

Die in Fig. 2 dargestellte Signalisierungsanlage 200 ist nur ein Beispiel für viele unterschiedliche mögliche Ausgestaltungen einer Signalisierungsanlage 200. Eine Signalisierungsanlage 200 kann eine relativ große Anzahl von unterschiedlichen Ausprägungen von Merkmalen aufweisen. Beispielhafte Merkmale sind,
- die Anzahl von Signalgebern 201;
- die Positionen der ein oder mehreren Signalgeber 201; und/oder
- die Zuordnung eines Signalgebers 201 zu einer möglichen Fahrtrichtung über eine Kreuzung.

Fig. 3 zeigt beispielhaft ein Fahrzeug 100, das sich auf einer Fahrbahn auf eine Signalisierungsanlage 200 zubewegt. Die ein oder mehreren Umfeldsensoren 103 des Fahrzeugs 100 können eingerichtet sein, Sensordaten (insbesondere Bilddaten) in Bezug auf die Signalisierungsanlage 200 zu erfassen. Die Sensordaten können dann analysiert werden (z.B. mittels eines Bildanalysealgorithmus), um Ausprägungen von ein oder mehreren Merkmalen der Signalisierungsanlage 200 zu ermitteln. Insbesondere kann auf Basis der Sensordaten ermittelt werden, welcher Signalgeber 201 der Signalisierungsanlage 200 für die (geplante) Fahrtrichtung des Fahrzeugs 100 relevant ist. Des Weiteren kann der Status des relevanten Signalgebers 201 (z.B. die Farbe, etwa rot, gelb oder grün) ermittelt werden.

Die Güte und/oder die Zuverlässigkeit, mit der auf Basis der Sensordaten die Ausprägung eines Merkmals einer Signalisierungsanlage 200 ermittelt werden kann, hängen typischerweise von der Entfernung 311, 312 des Fahrzeugs 100 zu der Signalisierungsanlage 200 ab. Des Weiteren haben auch aktuelle Witterungsverhältnisse typischerweise einen wesentlichen Einfluss auf die Güte und/oder die Zuverlässigkeit der ermittelten Ausprägung eines Merkmals. Außerdem können die Güte und/oder Zuverlässigkeit für unterschiedliche Merkmale unterschiedlich sein. Beispielsweise können die ein oder mehreren Umfeldsensoren 103 derart ausgelegt sein, dass eine Signalisierungsanlage 200 und ggf. die Anzahl von Signalgebern 201 und ggf. der Status der einzelnen Signalgeber 201 bereits bei einer ersten (relativ großen) Entfernung 311 zuverlässig auf Basis der Sensordaten erfasst werden können. Andererseits kann die zuverlässige Erkennung der Fahrtrichtung der einzelnen Signalgeber 201 (z.B. durch die Erkennung der dargestellten Pfeile 202) ggf. erst bei oder unter einer zweiten (relativ kleinen) Entfernung 312 möglich sein. Die erste Entfernung 311 kann z.B. bei 100-120m liegen. Die zweite Entfernung 312 kann z.B. bei 40-50m liegen.

Durch die reduzierte Zuverlässigkeit der ermittelten Ausprägung von zumindest einem der Merkmale einer Signalisierungsanlage 200 kann der Betrieb einer Fahrfunktion eines Fahrzeugs 100 beeinträchtigt werden. Insbesondere kann die automatisierte Längsfunktion des Fahrzeugs 100 beeinträchtigt werden, wenn für eine vorausliegende Signalisierungsanlage 200 nicht klar ermittelt werden kann, welcher Signalgeber 201 der aktuellen und/oder geplanten Fahrtrichtung des Fahrzeugs 100 zugeordnet ist. Insbesondere kann ggf. nicht zuverlässig ermittelt werden, ob das Fahrzeug 100 an der vorausliegenden Signalisierungsanlage 200 bremsen muss oder ob das Fahrzeug 100 in die, durch die vorausliegende Signalisierungsanlage 200 geregelte, Kreuzung einfahren kann. Ggf. kann dies erst ermittelt werden, wenn sich das Fahrzeug 100 in einer relativ kleinen Entfernung 312 zur Signalisierungsanlage 200 befindet, was jedoch zu einem reduzierten Komfort für einen Insassen des Fahrzeugs 100 führen kann (z.B. da aufgrund der relativ kleinen Entfernung 312 eine relativ starke Verzögerung des Fahrzeugs 100 bewirkt werden muss).

Das Fahrzeug 100 kann eine Speichereinheit 104 aufweisen, auf der digitale Karteninformation bezüglich des von dem Fahrzeug 100 befahrenen Straßennetzes gespeichert ist. Die digitale Karteninformation kann Ausprägungen von ein oder mehreren Merkmalen von ein oder mehreren Signalisierungsanlagen 200 in dem Straßennetz anzeigen. Insbesondere kann die digitalen Karteninformation für eine Signalisierungsanlage 200 die Zuordnung der ein oder mehreren Signalgeber 201 zu unterschiedlichen möglichen Fahrtrichtungen anzeigen. Mit anderen Worten, die digitale Karteninformation kann anzeigen, welcher Signalgeber 201 für die Freigabe von welcher Fahrtrichtung zuständig ist. Die digitale Karteninformation kann ggf. mittels einer Kommunikationseinheit 105 des Fahrzeugs 100 über eine drahtlose Kommunikationsverbindung (z.B. einer WLAN- oder einer LTE-Kommunikationsverbindung) empfangen werden.

Die Steuereinheit 101 des Fahrzeugs 100 kann eingerichtet sein (z.B. auf Basis der aktuellen Position des Fahrzeugs 100 und auf Basis einer geplanten Fahrroute und/oder auf Basis der Sensordaten der ein oder mehreren Umfeldsensoren 103), zu ermitteln, dass das Fahrzeug 100 auf eine vorausliegende Signalisierungsanlage 200 zufährt. Des Weiteren kann die Steuereinheit 101 auf Basis der (gespeicherten und/oder empfangenen) digitalen Karteninformation die Ausprägungen von ein oder mehreren Merkmalen der vorausliegenden Signalisierungsanlage 200 ermitteln. Insbesondere kann auf Basis der digitalen Karteninformation ermittelt werden, welcher Signalgeber 201 der Signalisierungsanlage 200 der aktuellen bzw. geplanten Fahrtrichtung des Fahrzeugs 100 zugeordnet ist. Außerdem kann auf Basis der Sensordaten der aktuelle Status des zugeordneten Signalgebers 201 ermittelt werden. Basierend darauf kann dann in zuverlässiger und komfortabler Weise eine automatisierte Fahrfunktion (z.B. eine automatisierte Längsführung des Fahrzeugs 100) ausgeführt werden. Insbesondere können so die Ausprägungen der ein oder mehreren relevanten Merkmale einer Signalisierungsanlage 200 bereits bei einer relativ großen Entfernung 311 des Fahrzeugs 100 zu der Signalisierungsanlage 200 ermittelt werden, wodurch die Zuverlässigkeit, der Verfügbarkeit und der Komfort einer automatisierten Fahrfunktion erhöht werden können.

Ein Fahrzeug 100 kann eingerichtet sein, Information in Bezug auf eine Signalisierungsanlage 200, die von dem Fahrzeug 100 passiert wird oder wurde, dazu zu nutzen, die digitale Karteninformation zu erstellen und/oder zu ergänzen. Die digitale Karteninformation kann lokal durch das Fahrzeug 100 und/oder zentral durch eine Zentraleinheit 300 (z.B. durch einen Backend-Server) erstellt und/oder ergänzt werden (siehe Fig. 3). In unmittelbarer Nähe zu einer Signalisierungsanlage 200 können durch die ein oder mehreren Umfeldsensoren 103 eines Fahrzeugs 100 typischerweise Sensordaten erfasst werden, die in präziser Weise die Ausprägung von ein oder mehreren Merkmalen der Signalisierungsanlage 200 anzeigen. Insbesondere kann in unmittelbarer Nähe auf Basis der erfassten Sensordaten in präziser und zuverlässiger Weise die Zuordnung zwischen Signalgebern 201 und möglichen Fahrtrichtungen bestimmt werden.

Das Fahrzeug 100 kann eingerichtet sein, die ermittelte Information (z.B. die Sensordaten und/oder die ermittelten Ausprägungen der ein oder mehreren Merkmale) über eine drahtlose Kommunikationsverbindung 301 an die Zentraleinheit 300 zu übermitteln (in Zusammenhang mit einem Identifikator für die jeweilige Signalisierungsanlage 200, etwa in Zusammenhang mit der Position der Signalisierungsanlage 200). Die Zentraleinheit 300 kann dann auf Basis der bereitgestellten Information einer Vielzahl von Fahrzeugen 100 digitale Karteninformation erstellen und aktualisieren, die für eine Vielzahl von unterschiedlichen Signalisierungsanlagen 200 die Ausprägungen von ein oder mehreren Merkmalen anzeigt. Die digitale Karteninformation kann dann den einzelnen Fahrzeugen 100 bereitgestellt werden, um (wie oben dargelegt) den Betrieb von automatisierten Fahrfunktionen zu unterstützen.

Es wird somit ermöglicht, die Kreuzungskomplexität und die Attribute bzw. die Merkmale einer Kreuzung (insbesondere der ein oder mehreren Signalisierungsanlagen 200 einer Kreuzung) durch das mehrfache Überfahren mit ein oder mehreren Fahrzeugen 100 zu erlernen, um auf Basis dieser Informationen die Funktionalität einer Fahrfunktion bzw. einer Assistenzfunktion in Bezug auf eine Signalisierungsanlage 200 der Kreuzung optimal anpassen zu können.

Beispielsweise können über die Frontkameras 103 von ein oder mehreren Fahrzeugen 100 beim Überfahren einer Kreuzung Sensordaten bezüglich der Kreuzung (insbesondere bezüglich einer Signalisierungsanlage 200 der Kreuzung) erfasst werden. Auf Basis der Sensordaten können die Signale, die Bodenmarkierungen und/oder die Richtungspfeile 202 von ein oder mehreren Signalgebern 201 der Signalisierungsanlage 200 ermittelt werden. Dabei kann ein Signalgeber 200 als eine Menge von Lichtzeichen betrachtet werden, die dieselben ein oder mehreren Fahrtrichtungen regeln. Es kann somit auf Basis der Sensordaten eine Zuordnung der unterschiedlichen Fahrtrichtungen zu den ein oder mehreren Signalgebern 201 ermittelt werden. Diese Information bezüglich einer Signalisierungsanlage 200 kann für eine spätere Verwendung gespeichert werden (z.B. im Rahmen einer digitalen Karte für ein Straßennetz).

Bei der Ausführung einer Fahrfunktion (z.B. einer automatisierten Bremsfunktion) kann dann die gespeicherte Information bezüglich einer Signalisierungsanlage 200 berücksichtigt werden. Insbesondere kann die Fahrfunktion ausgeführt werden, wenn ermittelt wird, dass die Signalisierungsanlage 200 nur einen Signalgeber 201 umfasst (die somit für alle möglichen Fahrtrichtungen relevant ist). Falls bei einer komplexen Signalisierungsanlage 200 der relevante Signalgeber 201 nicht eindeutig ermittelt werden kann, kann ggf. eine Aufforderung zur manuellen Übernahme an einen Fahrer des Fahrzeugs 100 erfolgen, oder es kann ein automatischer Eingriff der Fahrfunktion unterbunden werden. Andererseits kann, bei Verfügbarkeit von zuverlässiger, gespeicherter oder bereitgestellter, digitaler Karteninformation in Bezug auf eine Signalisierungsanlage 200, die Fahrfunktion in Abhängigkeit von der verfügbaren Information automatisch ausgeführt werden. Der Betrieb einer automatisierten Fahrfunktion kann somit von der Menge an (im Vorfeld ermittelter) Information abhängen, die in Bezug auf eine Signalisierungsanlage 200 zur Verfügung steht. Dabei steigt die Menge der verfügbaren Information mit der Anzahl von berücksichtigten Überfahrten von Fahrzeugen 100 an. Somit kann der Automatisierungsgrad einer Fahrfunktion eines Fahrzeugs 100 kontinuierlich erhöht werden.

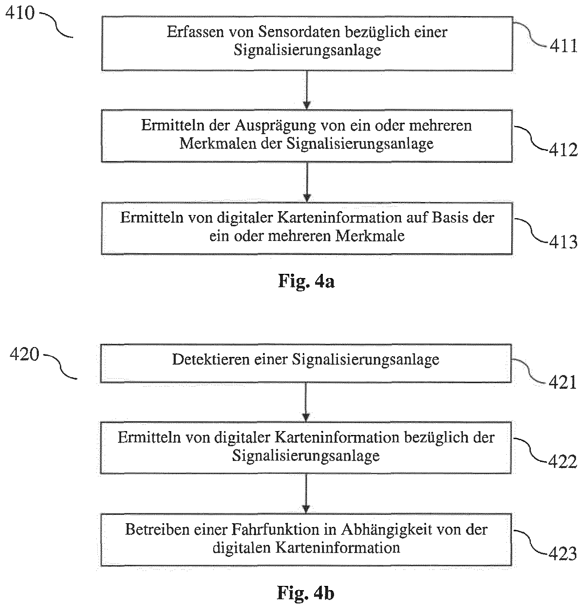

Fig. 4a zeigt ein Ablaufdiagramm eines beispielhaften Verfahrens 410 zur Ermittlung von digitaler (Karten-) Information bezüglich einer Signalisierungsanlage 200. Die digitale (Karten-) Information kann dabei die Position der Signalisierungsanlage 200 in einem Straßennetz anzeigen. Des Weiteren kann die digitale (Karten-) Information die Ausprägung von ein oder mehreren (statischen bzw. unveränderlichen) Merkmalen der Signalisierungsanlage 200 anzeigen. Das Verfahren 410 kann zumindest teilweise durch ein oder mehrere Fahrzeuge 100 und/oder zumindest teilweise durch eine Fahrzeug-externe (Zentral-) Einheit 300 ausgeführt werden.

Das Verfahren 410 umfasst das Erfassen 411, anhand von ein oder mehreren Umfeldsensoren 103 eines Fahrzeugs 100, von Sensordaten bei einer Fahrt vorbei an der Signalisierungsanlage 200. Insbesondere können Sensordaten bei einer Vielzahl von Fahrten vorbei an der Signalisierungsanlage 200 erfasst und für die Ermittlung der digitalen (Karten-) Information verwendet werden. Durch die Berücksichtigung der Sensordaten einer Vielzahl von Fahrten können die Genauigkeit und die Zuverlässigkeit der digitalen (Karten-) Information erhöht werden.

Außerdem umfasst das Verfahren 410 das Ermitteln 412 einer Ausprägung von ein oder mehreren (statischen) Merkmalen der Signalisierungsanlage 200 auf Basis der Sensordaten. Dabei können die ein oder mehreren Merkmale umfassen: eine Anzahl von unterschiedlichen Signalgebern 201 der Signalisierungsanlage 200 (dabei kann ein Signalgeber 201 eine Ampel mit ein, zwei oder drei Lichtzeiten sein, die einzeln oder ggf. teilweise zusammen aktiviert werden können); eine Position der ein oder mehreren unterschiedlichen Signalgeber 201 der Signalisierungsanlage 200; und/oder eine Zuordnung eines Signalgebers 201 der Signalisierungsanlage 200 zu einer möglichen Fahrtrichtung an der Signalisierungsanlage 200.

Das Verfahren 410 umfasst ferner das Ermitteln 413 (z.B. das Aktualisieren) von digitaler (Karten-) Information in Bezug auf die Signalisierungsanlage 200 auf Basis der ermittelten Ausprägung der ein oder mehreren Merkmale der Signalisierungsanlage 200. So kann insbesondere auf Basis der Sensordaten von unterschiedlichen Fahrzeugen 100 in zuverlässiger Weise digitale (Karten-) Information bezgl. einer Signalisierungsanlage 200 ermittelt und bereitgestellt werden. Die digitale (Karten-) Information kann dazu verwendet werden, den Betrieb einer Fahrfunktion (insbesondere einer Fahrerassistenzfunktion) eines Fahrzeugs 100 im Bereich einer Signalisierungsanlage 200 zu verbessern.

Fig. 4b zeigt ein Ablaufdiagramm eines beispielhaften Verfahrens 420 zum Betrieb einer Fahrfunktion eines Fahrzeugs 100. Die Fahrfunktion kann eine zumindest teilweise automatisierte Längs- und/oder Querführung des Fahrzeugs 100 umfassen. Dabei ist das Verfahren 420 insbesondere darauf ausgerichtet, die Zuverlässigkeit und/oder den Komfort der Fahrfunktion im Bereich einer Signalisierungsanlage 200 zu erhöhen. Das Verfahren 420 kann durch die Steuereinheit 101 eines Fahrzeugs 100 ausgeführt werden.

Das Verfahren 420 umfasst das Detektieren 421 einer vorausliegenden Signalisierungsanlage 200. Die Signalisierungsanlage 200 kann z.B. auf Basis von Sensordaten der ein oder mehreren Umfeldsensoren 103 des Fahrzeugs 100 detektiert werden. Dabei kann sich das Fahrzeug 100 in einer Entfernung zu der Signalisierungsanlage 200 befinden, die höher als der zweite Entfernungs-Schwellenwert 312 ist (aber kleiner als der erste Entfernungs-Schwellenwert 311).

Die Signalisierungsanlage 200 kann zumindest einen Signalgeber 201 umfassen. Insbesondere kann die Signalisierungsanlage 200 mehrere Signalgeber 201 für zumindest teilweise unterschiedliche mögliche Fahrtrichtungen des Fahrzeugs 100 an der Signalisierungsanlage 200 umfassen. Das Fahrzeug 100 kann sich dabei in einer Entfernung von der Signalisierungsanlage 200 befinden, die es (noch) nicht ermöglicht, die Zuordnung zwischen Signalgebern 201 und möglichen Fahrtrichtungen zuverlässig auf Basis der Sensordaten zu ermitteln.

Das Verfahren 420 umfasst ferner das Ermitteln 422 von (im Vorfeld ermittelter und/oder bereitgestellter) digitaler (Karten-) Information, die eine Zuordnung des zumindest einen Signalgebers 201 zu zumindest einer möglichen Fahrtrichtung des Fahrzeugs 100 an der Signalisierungsanlage 200 anzeigt. Die digitale (Karten-) Information kann auf einer Speichereinheit 104 des Fahrzeugs 100 gespeichert sein und/oder über eine Kommunikationseinheit 105 des Fahrzeugs 100 empfangen werden bzw. worden sein. Die digitale (Karten-) Information kann im Vorfeld auf die Ausführung des Verfahrens 420, z.B. gemäß dem Verfahren 410, ermittelt worden sein.

Außerdem umfasst das Verfahren 420 das Betreiben 423 der Fahrfunktion des Fahrzeugs 100 in Abhängigkeit von der digitalen (Karten-) Information bezüglich der Signalisierungsanlage 200. Die digitale (Karten-) Information kann ggf. mit relativ hoher Zuverlässigkeit den Signalgeber 201 anzeigen, die für eine geplante Fahrtrichtung des Fahrzeugs 100 relevant ist. In einem solchen Fall kann die Fahrfunktion auch im Bereich der Signalisierungsanlage 200 ausgeführt werden. Andererseits kann die digitale (Karten-) Information ggf. nicht in eindeutiger Weise anzeigen, welcher Signalgeber 201 für die geplante Fahrtrichtung des Fahrzeugs 100 relevant ist. In einem solchen Fall kann eine Übernahmeaufforderung an den Fahrer des Fahrzeugs 100 ausgegeben werden und/oder es kann die Fahrfunktion zumindest in dem Bereich der Signalisierungsanlage 200 deaktiviert werden. Das Verfahren 420 ermöglicht es somit, die Zuverlässigkeit und/oder den Komfort einer Fahrfunktion im Bereich einer Signalisierungsanlage 200 zu erhöhen.

Die vorliegende Erfindung ist nicht auf die gezeigten Ausführungsbeispiele beschränkt. Insbesondere ist zu beachten, dass die Beschreibung und die Figuren nur das Prinzip der erfindungsgemäßen Steuereinheit veranschaulichen sollen, der Schutzumfang hingegen, ist durch den Gegenstand der Ansprüche definiert.

## Patentansprüche

1. Steuereinheit (101) für ein Fahrzeug (100), wobei die Steuereinheit (101) eingerichtet ist,
- eine vorausliegende Signalisierungsanlage (200) zu detektieren; wobei die Signalisierungsanlage (200) zumindest einen Signalgeber (201) umfasst;
- digitale Karteninformation zu ermitteln, die eine Zuordnung des zumindest einen Signalgebers (201) zu zumindest einer möglichen Fahrtrichtung des Fahrzeugs (100) an der Signalisierungsanlage (200) anzeigt und/oder ermöglicht;
- einen Zuverlässigkeitswert zu ermitteln, der eine Zuverlässigkeit anzeigt, mit der ein für eine Fahrtrichtung des Fahrzeugs (100) relevanter Signalisierungszustand der Signalisierungsanlage (200) ermittelt werden kann;
- eine Fahrfunktion des Fahrzeugs (100) in Abhängigkeit von der digitalen Karteninformation und von dem Zuverlässigkeitswert zu betreiben, und
- auf Basis des Zuverlässigkeitswertes zu bestimmen, ob der für die Fahrtrichtung des Fahrzeugs (100) relevante Signalisierungszustand der Signalisierungsanlage (200) mit einer ausreichend hohen Zuverlässigkeit für ein automatisches Ausführen der Fahrfunktion ermittelt werden kann oder nicht; und
- eine Bestätigungsaufforderung zur Bestätigung des ermittelten Signalisierungszustands an einen Nutzer des Fahrzeugs (100) zu generieren, wenn bestimmt wurde, dass der Signalisierungszustand nicht mit einer ausreichend hohen Zuverlässigkeit ermittelt werden kann.

2. Steuereinheit (101) gemäß Anspruch 1, wobei die Steuereinheit (101) eingerichtet ist,
- auf Basis der digitalen Karteninformation, einen relevanten Signalgeber (201) der Signalisierungsanlage (200) zu bestimmen, der für eine geplante Fahrtrichtung des Fahrzeugs (100) relevant ist;
- einen Status des relevanten Signalgebers (201) zu ermitteln; und
- die Fahrfunktion des Fahrzeugs (100) in Abhängigkeit von dem Status des relevanten Signalgebers (201) zu betreiben.

3. Steuereinheit (101) gemäß Anspruch 2, wobei
- das Fahrzeug (100) ein oder mehrere Umfeldsensoren (103) umfasst, die eingerichtet sind, Sensordaten in Bezug auf ein Umfeld des Fahrzeugs (100) zu erfassen; und
- die Steuereinheit (101) eingerichtet ist, den Status des relevanten Signalgebers (201) auf Basis der Sensordaten zu ermitteln.

4. Steuereinheit (101) gemäß einem der vorhergehenden Ansprüche, wobei
- die digitale Karteninformation auf Sensordaten bezüglich der Signalisierungsanlage (200) basiert, die im Vorfeld durch einen Umfeldsensor (103) zumindest eines Fahrzeugs (100) erfasst wurden; und/oder
- die digitale Karteninformation auf einer Speichereinheit (104) des Fahrzeugs (100) gespeichert ist; und/oder
- die digitale Karteninformation über eine Kommunikationseinheit (105) des Fahrzeugs (100) von einer Fahrzeug-externen Einheit (300) empfangen wurde oder wird.

5. Steuereinheit (101) gemäß einem der Ansprüche 2 bis 4, wobei
- die Signalisierungsanlage (200) eine Mehrzahl von Signalgebern (201) umfasst, die zumindest teilweise unterschiedlichen möglichen Fahrtrichtungen zugeordnet sind; und
- die Steuereinheit (101) eingerichtet ist, den relevanten Signalgeber (201) in Abhängigkeit von der geplanten Fahrtrichtung des Fahrzeugs (100) aus der Mehrzahl von Signalgebern (201) auszuwählen.

6. Steuereinheit (101) gemäß einem der vorhergehenden Ansprüche, wobei
- die Fahrfunktion eine zumindest teilweise automatisierte Längs- und/oder Querführung des Fahrzeugs (100) umfasst; und/oder
- die Fahrfunktion ein mögliches Abbremsen des Fahrzeugs (100) bis zum Erreichen der Signalisierungsanlage (200) umfasst; und/oder
- die Fahrfunktion ein automatisiertes Anfahren des Fahrzeugs (100) an der Signalisierungsanlage (200) umfasst.

7. Steuereinheit (101) gemäß einem der Ansprüche 2 bis 6, wobei die Steuereinheit (101) eingerichtet ist,
- zu bestimmen, dass der für die geplante Fahrtrichtung des Fahrzeugs (100) relevante Signalgeber (201) nicht mit ausreichender Zuverlässigkeit ermittelt werden kann; und
- in Reaktion darauf, eine manuelle Übergabe zur Führung des Fahrzeugs (100) an einen Fahrer des Fahrzeugs (100) zu veranlassen und/oder eine zumindest vorübergehende Deaktivierung der Fahrfunktion zu veranlassen und/oder eine Anfrage bezüglich der automatisierten Ausführung der Fahrfunktion an den Fahrer des Fahrzeugs (100) ausgeben; oder
- zu bestimmen, dass der für die geplante Fahrtrichtung des Fahrzeugs (100) relevante Signalgeber (201) mit ausreichender Zuverlässigkeit ermittelt werden kann; und
- die Fahrfunktion in Abhängigkeit von dem Status des relevanten Signalgebers (201) zu betreiben.

8. Steuereinheit (101) gemäß einem der vorhergehenden Ansprüche, wobei
- das Fahrzeug (100) ein oder mehrere Umfeldsensoren (103) umfasst, die eingerichtet sind, Sensordaten in Bezug auf ein Umfeld des Fahrzeugs (100) zu erfassen;
- die Steuereinheit (101) eingerichtet ist, die dem zumindest einen Signalgeber (201) zugeordnete mögliche Fahrtrichtung nur dann allein auf Basis der Sensordaten zu ermitteln, wenn die Sensordaten in einer Entfernung (312) zu der Signalisierungsanlage (200) erfasst wurden, die kleiner als oder gleich wie ein Entfernungs-Schwellenwert ist; und
- die Steuereinheit (101) eingerichtet ist, die dem zumindest einen Signalgeber (201) zugeordnete mögliche Fahrtrichtung bereits dann auf Basis der digitalen Karteninformation zu ermitteln, wenn das Fahrzeug (100) noch um mehr als den Entfernungs-Schwellenwert von der Signalisierungseinheit (200) entfernt ist.

9. Steuereinheit (101) gemäß einem der vorhergehenden Ansprüche, wobei
- das Fahrzeug (100) ein oder mehrere Umfeldsensoren (103) umfasst, die eingerichtet sind, Sensordaten in Bezug auf ein Umfeld des Fahrzeugs (100) zu erfassen;
- die Steuereinheit (101) eingerichtet ist, auf Basis der Sensordaten bei einer Fahrt vorbei an der Signalisierungsanlage (200) eine Ausprägung von ein oder mehreren Merkmalen der Signalisierungsanlage (200) zu ermitteln;
- die ein oder mehreren Merkmale umfassen:
- eine Anzahl von unterschiedlichen Signalgebern (201) der Signalisierungsanlage (200); und/oder
- eine Position der ein oder mehreren unterschiedlichen Signalgeber (201) der Signalisierungsanlage (200); und/oder
- eine Zuordnung eines Signalgebers (201) der Signalisierungsanlage (200) zu einer möglichen Fahrtrichtung an der Signalisierungsanlage (200); und
- die Steuereinheit (101) eingerichtet ist, die ermittelte Ausprägung der ein oder mehreren Merkmalen der Signalisierungsanlage (200) als digitale Karteninformation zu speichern oder zur Ermittlung von digitaler Karteninformation bereitzustellen bzw. zu verwenden.

10. Steuereinheit (101) gemäß einem der vorhergehenden Ansprüche, wobei die digitale Karteninformation anzeigt,
- dass die Signalisierungsanlage (200) nur eine Signalgruppe aufweist, die für alle möglichen Fahrtrichtungen an der Signalisierungsanlage (200) gilt; und/oder
- eine Anzahl von unterschiedlichen Signalgruppen der Signalisierungsanlage; und/oder
- eine Zuordnung von unterschiedlichen Signalgebern (201) und/oder unterschiedlichen Signalgruppen der Signalisierungsanlage (200) zu unterschiedlichen möglichen Fahrtrichtungen an der Signalisierungsanlage (200); und/oder
- Information in Bezug auf eine relative Positionierung von unterschiedlichen Signalgebern (201) und/oder unterschiedlichen Signalgruppen der Signalisierungsanlage (200) zueinander.

11. Steuereinheit (101) gemäß einem der vorhergehenden Ansprüche, wobei die Steuereinheit (101) eingerichtet ist,
- eine Fahrroute des Fahrzeugs (100) zu ermitteln;
- im Vorfeld zu einer Fahrt entlang der Fahrroute, eine Vielzahl von Signalisierungsanlagen (200) auf der Fahrroute zu detektieren;
- im Vorfeld zu der Fahrt entlang der Fahrroute, digitale Karteninformation für die Vielzahl von Signalisierungsanlagen (200) zu ermitteln; und
- auf Basis der digitalen Karteninformation für die Vielzahl von Signalisierungsanlagen (200) bereits im Vorfeld zu der Fahrt entlang der Fahrroute zu bestimmen, ob die Fahrfunktion auf der Fahrt entlang der Fahrroute automatisiert betrieben werden kann oder nicht.

12. Steuereinheit (101) gemäß einem der vorangegangenen Ansprüche, wobei die Steuereinheit (101) eingerichtet ist, die Fahrfunktion, insbesondere ein automatisches Bremsmanöver an der Signalisierungsanlage (200) oder ein automatisches Anfahrmanöver an der Signalisierungsanlage (200), nur dann automatisch durchzuführen, wenn bestimmt wurde, dass der Signalisierungszustand mit einer ausreichend hohen Zuverlässigkeit ermittelt werden kann oder wenn der ermittelte Signalisierungszustand durch den Nutzer des Fahrzeugs (100) bestätigt wurde.

13. Steuereinheit (101) gemäß einem der vorangegangenen Ansprüche, wobei die Steuereinheit (101) eingerichtet ist,
- digitale Karteninformation zu ermitteln, die eine Zuordnung des zumindest einen Signalgebers (201) zu zumindest einer möglichen Fahrtrichtung des Fahrzeugs (100) an der Signalisierungsanlage (200) anzeigt und/oder ermöglicht; und/oder
- Sensordaten bezüglich des zumindest einen Signalgebers (201) zu ermitteln; und
- den Zuverlässigkeitswert auf Basis der digitalen Karteninformation und/oder auf Basis der Sensordaten zu ermitteln.

## Claims

1. Control unit (101) for a vehicle (100), wherein the control unit (101) is configured
- to detect a signalling installation (200) in front of it, the signalling installation (200) comprising at least one signal generator (201);
- to determine digital map information which indicates and/or enables an assignment of the at least one signal generator (201) to at least one possible direction of travel of the vehicle (100) at the signalling installation (200);
- to determine a reliability value indicating a reliability with which a signalling state of the signalling installation (200) that is relevant to a direction of travel of the vehicle (100) can be determined;
- to operate a driving function of the vehicle (100) on the basis of the digital map information and the reliability value, and
- to determine, on the basis of the reliability value, whether or not the signalling state of the signalling installation (200) that is relevant to the direction of travel of the vehicle (100) can be determined with a sufficiently high level of reliability for automatic execution of the driving function; and
- to generate a confirmation request to a user of the vehicle (100) confirming the determined signalling state if it has been determined that the signalling state cannot be determined with a sufficiently high level of reliability.

2. Control unit (101) according to Claim 1, wherein the control unit (101) is configured
- to determine, on the basis of the digital map information, a relevant signal generator (201) of the signalling installation (200) that is relevant to a planned direction of travel of the vehicle (100);
- to determine a status of the relevant signal generator (201); and
- to operate the driving function of the vehicle (100) on the basis of the status of the relevant signal generator (201).

3. Control unit (101) according to Claim 2, wherein
- the vehicle (100) comprises one or more environmental sensors (103) which are configured to acquire sensor data in relation to an environment of the vehicle (100); and
- the control unit (101) is configured to determine the status of the relevant signal generator (201) based on the sensor data.

4. Control unit (101) according to one of the preceding claims, wherein
- the digital map information is based on sensor data relating to the signalling installation (200) which have been acquired in advance by an environmental sensor (103) of at least one vehicle (100); and/or
- the digital map information is stored on a storage unit (104) of the vehicle (100); and/or
- the digital map information has been received or is received from a unit (300) outside the vehicle via a communication unit (105) of the vehicle (100).

5. Control unit (101) according to one of Claims 2 to 4, wherein
- the signalling installation (200) comprises a plurality of signal generators (201) which are at least partially assigned to different possible directions of travel; and
- the control unit (101) is configured to select the relevant signal generator (201) from the plurality of signal generators (201) on the basis of the planned direction of travel of the vehicle (100).

6. Control unit (101) according to one of the preceding claims, wherein
- the driving function includes at least partially automated longitudinal and/or lateral guidance of the vehicle (100); and/or
- the driving function includes possible braking of the vehicle (100) until the signalling installation (200) is reached; and/or
- the driving function includes automatic starting of the vehicle (100) at the signalling installation (200).

7. Control unit (101) according to one of Claims 2 to 6, wherein the control unit (101) is configured
- to determine that the signal generator (201) relevant to the planned direction of travel of the vehicle (100) cannot be determined with sufficient reliability; and
- in response to this, to cause a manual handover of the guidance of the vehicle (100) to a driver of the vehicle (100) and/or to cause at least temporary deactivation of the driving function and/or to output a request for the automated execution of the driving function to the driver of the vehicle (100); or
- to determine that the signal generator (201) relevant to the planned direction of travel of the vehicle (100) can be detected with sufficient reliability; and
- to operate the driving function depending on the basis of the status of the relevant signal generator (201).

8. Control unit (101) according to one of the preceding claims, wherein
- the vehicle (100) comprises one or more environmental sensors (103) which are configured to acquire sensor data in relation to an environment of the vehicle (100);
- the control unit (101) is configured to determine the possible direction of travel associated with the at least one signal generator (201) on the basis of the sensor data alone only when the sensor data were acquired at a distance (312) from the signalling installation (200) which is less than or equal to a distance threshold value; and
- the control unit (101) is configured to already determine the possible direction of travel associated with the at least one signal generator (201) on the basis of the digital map information when the vehicle (100) is still more than the distance threshold value away from the signalling unit (200).

9. Control unit (101) according to one of the preceding claims, wherein
- the vehicle (100) comprises one or more environmental sensors (103) which are configured to acquire sensor data in relation to an environment of the vehicle (100);
- the control unit (101) is configured to determine a manifestation of one or more features of the signalling installation (200) on the basis of the sensor data when driving past the signalling installation (200);
- the one or more features comprise:
- a number of different signal generators (201) of the signalling installation (200); and/or
- a position of the one or more different signal generators (201) of the signalling installation (200); and/or
- an assignment of a signal generator (201) of the signalling installation (200) to a possible direction of travel at the signalling installation (200); and
- the control unit (101) is configured to store the determined manifestation of the one or more features of the signalling installation (200) as digital map information or to provide or use it for the determination of digital map information.

10. Control unit (101) according to one of the preceding claims, wherein the digital map information indicates
- that the signalling installation (200) has only one signal group that applies to all possible directions of travel at the signalling installation (200); and/or
- a number of different signal groups of the signalling installation; and/or
- an assignment of different signal generators (201) and/or different signal groups of the signalling installation (200) to different possible directions of travel at the signalling installation (200); and/or
- information relating to a relative positioning of different signal generators (201) and/or different signal groups of the signalling installation (200) with respect to each other.

11. Control unit (101) according to one of the preceding claims, wherein the control unit (101) is configured
- to determine a driving route of the vehicle (100);
- to detect a multiplicity of signalling installations (200) on the driving route prior to a journey along the driving route;
- to determine digital map information for the multiplicity of signalling installations (200) prior to the journey along the driving route; and
- to already determine whether or not the driving function can be operated automatically on the journey along the driving route on the basis of the digital map information for the multiplicity of signalling installations (200) prior to the journey along the driving route.

12. Control unit (101) according to one of the preceding claims, wherein the control unit (101) is configured to perform the driving function, in particular an automatic braking manoeuvre at the signalling installation (200) or an automatic starting manoeuvre at the signalling installation (200), automatically only when it has been determined that the signalling state can be determined with a sufficiently high level of reliability or if the signalling state determined has been confirmed by the user of the vehicle (100).

13. Control unit (101) according to one of the preceding claims, wherein the control unit (101) is configured
- to determine digital map information which indicates and/or enables an assignment of the at least one signal generator (201) to at least one possible direction of travel of the vehicle (100) at the signalling installation (200); and/or
- to determine sensor data relating to the at least one signal generator (201); and
- to determine the reliability value based on the digital map information and/or the sensor data.

## Revendications

1. Unité de commande (101) pour un véhicule (100), l'unité de commande (101) étant conçue pour
- détecter un système de signalisation amont (200) ; le système de signalisation (200) comprenant au moins un émetteur de signal (201) ;
- établir une information cartographique numérique qui indique et/ou facilite au niveau du système de signalisation (200) une attribution dudit au moins un émetteur de signal (201) à au moins un sens de la marche possible du véhicule (100) ;
- déterminer une valeur de fiabilité qui indique une fiabilité avec laquelle un état de signalisation du système de signalisation (200), pertinent pour un sens de la marche du véhicule (100), peut être établi ;
- exploiter une fonction de conduite du véhicule (100) en fonction de l'information cartographique numérique et de la valeur de fiabilité, et
- déterminer sur la base de la valeur de fiabilité si l'état de signalisation du système de signalisation (200), pertinent pour le sens de la marche du véhicule (100), peut être établi ou non avec une fiabilité suffisamment élevée pour une exécution automatique de la fonction de conduite ; et
- générer une demande de confirmation pour confirmer l'état de signalisation établi pour un utilisateur du véhicule (100) lorsqu'il a été déterminé que l'état de signalisation ne peut pas être établi avec une fiabilité suffisamment élevée.

2. Unité de commande (101) selon la revendication 1, l'unité de commande (101) étant conçue pour
- sur la base de l'information cartographique numérique, déterminer un émetteur de signal pertinent (201) du système de signalisation (200) qui est pertinent pour un sens de la marche prévu du véhicule (100) ;
- établir un statut de l'émetteur de signal pertinent (201) ; et
- exploiter la fonction de conduite du véhicule (100) en fonction du statut de l'émetteur de signal pertinent (201).

3. Unité de commande (101) selon la revendication 2, dans laquelle
- le véhicule (100) comprend un ou plusieurs capteurs d'environnement (103) qui sont conçus pour détecter des données de capteur concernant un environnement du véhicule (100) ; et
- l'unité de commande (101) est conçue pour établir le statut de l'émetteur de signal pertinent (201) sur la base des données de capteur.

4. Unité de commande (101) selon l'une quelconque des revendications précédentes, dans laquelle
- l'information cartographique numérique est basée sur des données de capteur concernant le système de signalisation (200) qui ont été détectées au cours de la préparation par un capteur d'environnement (103) d'au moins un véhicule (100) ; et/ou
- l'information cartographique numérique est stockée sur une unité de mémoire (104) du véhicule (100) ; et/ou
- l'information cartographique numérique a été ou est reçue d'une unité externe au véhicule (300) par l'intermédiaire d'une unité de communication (105) du véhicule (100).

5. Unité de commande (101) selon l'une quelconque des revendications 2 à 4, dans laquelle
- le système de signalisation (200) comprend une pluralité d'émetteurs de signal (201) qui est attribuée au moins en partie à différents sens de la marche possibles ; et
- l'unité de commande (101) est conçue pour sélectionner l'émetteur de signal pertinent (201) en fonction du sens de la marche prévu du véhicule (100) parmi la pluralité d'émetteurs de signal (201).

6. Unité de commande (101) selon l'une quelconque des revendications précédentes, dans laquelle
- la fonction de conduite comprend un guidage longitudinal et/ou transversal au moins partiellement automatisé du véhicule (100) ; et/ou
- la fonction de conduite comprend un freinage possible du véhicule (100) jusqu'à ce que le système de signalisation (200) soit atteint ; et/ou
- la fonction de conduite comprend un rapprochement automatisé du véhicule (100) du système de signalisation (200).

7. Unité de commande (101) selon l'une quelconque des revendications 2 à 6, l'unité de commande (101) étant conçue pour
- déterminer que l'émetteur de signal (201) pertinent pour le sens de la marche prévu du véhicule (100) ne peut pas être établi avec une fiabilité suffisante ; et
- en réponse, provoquer un transfert manuel pour la conduite du véhicule (100) à un conducteur du véhicule (100) et/ou provoquer une désactivation au moins provisoire de la fonction de conduite et/ou émettre une demande concernant l'exécution automatisée de la fonction de conduite au conducteur du véhicule (100) ; ou
- déterminer que l'émetteur de signal pertinent (201) pour le sens de la marche prévu du véhicule (100) peut être établi avec une fiabilité suffisante ; et
- exploiter la fonction de conduite en fonction du statut de l'émetteur de signal pertinent (201).

8. Unité de commande (101) selon l'une quelconque des revendications précédentes, dans laquelle
- le véhicule (100) comprend un ou plusieurs capteurs d'environnement (103) qui sont conçus pour détecter des données de capteur concernant un environnement du véhicule (100) ;
- l'unité de commande (101) est conçue pour n'établir le sens de la marche possible, attribué audit au moins un émetteur de signal (201), uniquement sur la base des données de capteur que lorsque les données de capteur sont détectées à une distance (312) du système de signalisation (200) qui est inférieure ou égale à une valeur seuil de distance ; et
- l'unité de commande (101) est conçue pour établir le sens de la marche possible, attribué audit au moins émetteur de signal (201), sur la base de l'information cartographique numérique déjà lorsque le véhicule (100) est encore éloigné de l'unité de signalisation (200) de plus de la valeur seuil de distance.

9. Unité de commande (101) selon l'une quelconque des revendications précédentes, dans laquelle
- le véhicule (100) comprend un ou plusieurs capteurs d'environnement (103) qui sont conçus pour détecter des données de capteur concernant un environnement du véhicule (100) ;
- l'unité de commande (101) est conçue pour établir sur la base des données de capteur lors d'un passage devant le système de signalisation (200) une forme d'une ou de plusieurs particularités du système de signalisation (200) ;
- ladite une ou les plusieurs particularités comprennent :
- un nombre de différents émetteurs de signal (201) du système de signalisation (200) ; et/ou
- une position dudit un ou des plusieurs émetteurs de signal différents (201) du système de signalisation (200) ; et/ou
- une attribution d'un émetteur de signal (201) du système de signalisation (200) à un sens de la marche possible au niveau du système de signalisation (200) ; et
- l'unité de commande (101) est conçue pour stocker la forme établie de ladite une ou des plusieurs particularités du système de signalisation (200) sous la forme d'une information cartographique numérique ou pour la fournir et/ou l'utiliser pour établir une information cartographique numérique.

10. Unité de commande (101) selon l'une quelconque des revendications précédentes, dans laquelle l'information cartographique numérique indique
- que le système de signalisation (200) ne présente qu'un seul groupe de signaux qui est valable pour tous les sens de la marche possibles au niveau du système de signalisation (200) ; et/ou
- un nombre de différents groupes de signaux du système de signalisation ; et/ou
- une attribution de différents émetteurs de signal (201) et/ou de différents groupes de signaux du système de signalisation (200) à différents sens de la marche possibles au niveau du système de signalisation (200) ; et/ou
- une information concernant un positionnement relatif de différents émetteurs de signal (201) et/ou de différents groupes de signaux du système de signalisation (200) les uns par rapport aux autres.

11. Unité de commande (101) selon l'une quelconque des revendications précédentes, l'unité de commande (101) étant conçue pour
- établir un itinéraire du véhicule (100) ;
- en préparation d'un trajet le long de l'itinéraire, détecter une pluralité de systèmes de signalisation (200) sur l'itinéraire ;
- en préparation du trajet le long de l'itinéraire, établir une information cartographique numérique pour la pluralité de systèmes de signalisation (200) ; et
- sur la base de l'information cartographique numérique pour la pluralité de systèmes de signalisation (200), déterminer dès la préparation au trajet le long de l'itinéraire si la fonction de conduite sur le trajet le long de l'itinéraire peut être exploitée de manière automatisée ou non.

12. Unité de commande (101) selon l'une quelconque des revendications précédentes, dans laquelle l'unité de commande (101) est conçue pour exécuter de manière automatisée la fonction de conduite, en particulier une manœuvre de freinage automatique au niveau du système de signalisation (200) ou une manœuvre de rapprochement automatique au niveau du système de signalisation (200), uniquement s'il a été déterminé que l'état de signalisation peut être établi avec une fiabilité suffisamment élevée ou si l'état de signalisation établi est confirmé par l'utilisateur du véhicule (100).

13. Unité de commande (101) selon l'une quelconque des revendications précédentes, l'unité de commande (101) étant conçue pour
- établir une information cartographique numérique qui indique et/ou facilite au niveau du système de signalisation (200) une attribution dudit au moins un émetteur de signal (201) à au moins un sens de la marche possible du véhicule (100) ; et/ou
- établir des données de capteur concernant ledit au moins un émetteur de signal (201) ; et
- établir la valeur de fiabilité sur la base de l'information cartographique numérique et/ou sur la base des données de capteur.
